Europäisches Patentamt

European Patent Office

Office européen des brevets

(19)

(11) Veröffentlichungsnummer : **0 035 677**
**B1**

# EUROPÄISCHE PATENTSCHRIFT

(12)

(45) Veröffentlichungstag der Patentschrift :
14.09.83

(21) Anmeldenummer : 81101256.6

(22) Anmeldetag : 21.02.81

(51) Int. Cl.³ : **C 08 F   8/50// C08F110/10, C08K5/15**

(54) **Verhinderung der Russbildung beim gezielten Abbau von hochmolekularen Polyisobutylenen.**

(30) Priorität : 05.03.80 DE 3008389

(43) Veröffentlichungstag der Anmeldung :
16.09.81 Patentblatt 81/37

(45) Bekanntmachung des Hinweises auf die Patenterteilung : 14.09.83 Patentblatt 83/37

(84) Benannte Vertragsstaaten :
AT BE DE FR GB NL

(56) Entgegenhaltungen :
BE A 696 619
DE A 1 114 319
GB A 1 489 236

(73) Patentinhaber : BASF Aktiengesellschaft
Carl-Bosch-Strasse 38
D-6700 Ludwigshafen (DE)

(72) Erfinder : Mueller-Tamm, Heinz, Dr.
Ottweilerstrasse 9
D-6700 Ludwigshafen (DE)
Erfinder : Immel, Wolfgang, Dr.
Carl-Bosch-Strasse 78
D-6700 Ludwigshafen (DE)
Erfinder : Mohr, Heinrich, Dr.
Carostrasse 41
D-6710 Frankenthal (DE)
Erfinder : Fauth, Karl-Heinz
Haardtblick 7
D-6719 Wattenheim (DE)

Verhinderung der Rußbildung beim gezielten Abbau von hochmolekularen Polyisobutylenen

Die Erfindung betrifft ein Verfahren zum Abbau von hochmolekularen, Wärmestabilisator enthaltenden Polyisobutylenen mit durchschnittlichen Molekulargewichten aus dem Viskositätsmittel größer als 2 000 000 zu Polyisobutylenen mit durchschnittlichen Molekulargewichten aus dem Viskositätsmittel kleiner als 200 000 in Schneckenmaschinen bis zu drei Minuten lang bei Temperaturen zwischen 150 und 400 °C und Scherungen mit Schergeschwindigkeitsgradienten zwischen 100 und 700 sec$^{-1}$.

Bei derartigen Verfahren sind zur Stabilisierung des Polyisobutylens und zur Verhinderung der Rußbildung Zusätze in Mengen von 0,1 bis 0,2 Gewichtsprozent erforderlich.

Es ist bereits bekannt, zur Erfüllung dieser Erfordernisse dem hochmolekularen Polyisobutylen Wärmestabilisatoren zuzugeben, welche das Polyisobutylen gegen den Angriff von Luftsauerstoff und Scherkräften schützen. So kann man Verbindungen wie verschiedene Tert.-butylkresole (vgl. GB-PS 696 619) oder Mischungen aus 4,4′-Butyliden-bis-(6-tert.-butyl-m-kresol) und Thiodipropionsäuredilaurylester (vgl. DE-PS 1 495 156) als wirksame Zusatzstoffe verwenden. Dabei ist es allerdings nötig, relativ hohe Konzentrationen, nämlich 0,1 bis 0,2 Gewichtsprozent, dieser Wärmestabilisatoren zu wählen, um die Wirksamkeit dieser Produkte auszunützen. Außerdem haben die wirksamsten dieser Stoffe, wie das 2,2′-Methylen-bis-(4-methyl-6-tert.-butylphenol), toxische Eigenschaften. Man kann daher diese bekannten Verbindungen nicht ohne Bedenken für die Herstellung von solchen Artikeln gebrauchen, bei denen es in erster Linie darauf ankommt, daß sie ungiftig sind, z. B. für die Herstellung von Folienbahnen zur Abdichtung gegen drückendes und nichtdrückendes Wasser oder von Kaugummimassen. Es gibt zwar auch Stabilisatoren, die als weniger toxisch angesehen werden, wie das 2,6-Di-tert.-butyl-4-methylphenol. Leider sind diese Zusätze aber nicht sehr wirksam und müssen deshalb in hohen Konzentrationen angewendet werden. Außerdem liegen nicht immer ausreichende Erfahrungen vor, ob derartige Stabilisatoren wirklich auf die Dauer für den Menschen unschädlich sind.

Der Erfindung liegt die Aufgabe zugrunde, einen Stabilisator für Polyisobutylen aufzufinden, der in sehr geringer Konzentration wirksam ist und von dem durch mehrjährige Erfahrung einwandfrei feststeht, daß er keinerlei toxische Wirkung ausübt und beim Abbau des Polyisobutylens in Schneckenmaschinen bei Temperaturen zwischen 150 und 400 °C keine Produktverfärbungen hervorruft.

Diese Aufgabe wird erfindungsgemäß dadurch gelöst, daß als Stabilisator ein α-, β-, γ- oder δ-Tocopherol oder Mischungen derselben untereinander in Mengen von 5 bis 500, bevorzugt 10 bis 100 Gew-ppm, bezogen auf das Polyisobutylen, verwendet wird.

Verfahren zum Abbau von hochmolekularen, einen Stabilisator enthaltenden Polyisobutylenen zu niedermolekularen Polyisobutylenen in Schneckenmaschinen sind bekannt und beispielsweise in der DE-AS 1 911 307, in der BE-PS 696 619 und in der DE-OS 1 770 295 beschrieben. Beim vorliegenden Verfahren wird in Schneckenmaschinen bis zu drei Minuten lang, bevorzugt 1,5 bis 2,5 Minuten, bei Temperaturen zwischen 150 und 400 °C und Scherungen mit Geschwindigkeitsgradienten zwischen 100 und 700 sec$^{-1}$ in enger Anlehnung an die aus der DE-AS 1 911 307 bekannte Prozedur gearbeitet. Das zum Abbau bestimmte Polyisobutylen hat ein durchschnittliches Molekulargewicht aus dem Viskositätsmittel $\overline{M}_v$, abgeleitet aus der Beziehung $[\eta] = 3,06 \cdot 10^{-4} \cdot \overline{M}_v^{0,65}$, größer als 2 000 000. Dieses Polyisobutylen wird durch Zufuhr von thermischer und mechanischer Energie auf ein Polyisobutylen mit durchschnittlichen Molekulargewichten aus dem Viskositätsmittel kleiner als 200 000, bevorzugt 30 000 bis 100 000, im Schneckenextruder abgebaut. In der Schneckenmaschine herrschen dabei Temperaturen zwischen 150 und 400 °C und Scherungen mit Geschwindigkeitsgradienten von 100 bis 700 sec$^{-1}$. Die mittlere Verweilzeit des Polyisobutylens in der Schneckenmaschine beträgt maximal drei Minuten, bevorzugt zwischen 1,5 und 2,5 Minuten.

Erfindungsgemäß enthält das für den Abbau vorgesehene hochmolekulare Polyisobutylen 5 bis 500, bevorzugt 10 bis 100 Gew.-ppm eines α-, β-, γ- oder δ-Tocopherols oder Mischungen derselben untereinander.

Unter α-Tocopherol ist ein 2,5,7,8-Tetramethyl-2-(4′,8′,12′-trimethyltridecyl)-6-oxychroman und unter β-Tocopherol ein 2,5,8-Trimethyl-2-(4′,8′,12′-trimethyl-tridecyl)-6-oxychroman zu verstehen. γ- und δ-Tocopherol unterscheiden sich durch weiteren Mindergehalt an Methylgruppen am Benzolring. Die d- und l-Formen sind beide brauchbar. Die Tocopherole haben unterschiedliche Wirksamkeit, wobei man dem α-Tocopherol die Effektivität 1,0 gibt und für δ-Tocopherol etwa den Wert 0,6 findet. β- und γ-Tocopherol ordnen sich dazwischenliegend an.

Das Tocopherol wird in Mengen von 5 bis 500, vorzugsweise 10 bis 100, besonders bevorzugt 10 bis 50 Gew.-ppm, dem Polyisobutylen zugesetzt. Die Verwendung von Tocopherol als Stabilisator für Polymerisate, nämlich für Polyäthylen oder Polypropylen, ist an sich aus der DE-PS 1 114 319 bekannt, jedoch waren Konzentrationen von 0,02 bzw. 0,1 Gew.-% nötig.

Die Herstellung der Mischungen kann auf übliche Weise, z. B. in Knetern oder Strangpressen erfolgen. Man kann auch zunächst aus dem Stabilisator und Polyisobutylen ein Konzentrat herstellen, das mit weiterem Polyisobutylen vermischt wird. Eine besonders vorteilhafte Ausführung besteht im Zusatz des Tocopherols zum Monomeren vor der Durchführung der Polymerisation, weil sich gezeigt hat, daß die Tocopherole keine, für die Polymerisation des Isobutylens hemmend wirkende Verunreinigungen darstellen. Mit dem letzteren Mischungsverfahren ist eine genaue Dotierung des entstandenen Polymerisats mit Stabilisator gewährleistet.

Der mit der Erfindung erzielte Vorteil besteht insbesondere darin, daß nach neuem Verfahren Folien und beliebige Gegenstände hergestellt werden können, die sehr wenig Stabilisator enthalten, nicht toxisch sind und trotzdem eine ausgezeichnete Licht- und Wärmebeständigkeit besitzen.

Um die Überlegenheit der neuen Produkte gegenüber herkömmlichen, als toxisch nicht einwandfrei angesehenen stabilisierten Polyisobutylenen und gegenüber unstabilisierten Polyisobutylenen zu zeigen, wurden folgende, in der Tabelle aufgeführten Mischungen hergestellt. Alle Proben wurden gemäß ASTM D 2 538 unter gleichen Bedingungen bei 180 °C unter Luftzutritt im Brabender-Plastograph® (50 Umdrehungen pro Minute, 40 g Einwaage) gewalzt und die Stabilitätsperiode bestimmt. Die Zeit bis zum Steilabfall des Drehmoments (Stabilitätsperiode) wird in Minuten angegeben. Für alle Proben wurde ein Polyisobutylen als Ausgangsprodukt verwendet, das ein Molekulargewicht (Viskositätsmittel) $\overline{M}_v$ von 4 000 000 aufwies. Der Stabilisator wurde in den nachgenannten Konzentrationen dem Monomeren vor der Polymerisation zugegeben.

| Probenbezeichnung | Stabilisatorkonzentration | Stabilitäts- periode in Minuten |
|---|---|---|
| A | ohne Stabilisator | 2 |
| B | 20 Gew.-ppm TBK[1] | 3 |
| C | 100 Gew.-ppm TBK[1] | 14 |
| D | 20 Gew.-ppm Toco.[2] | 18 |
| E | 100 Gew.-ppm Toco.[2] | 63 |

(1) Stabilisator TBK: 2,6-Di-tertiärbutyl-4-methylphenol (Gew.-ppm = Gewichtsteile pro 1 Million Gewichtsteile Polyisobutylen)

(2) Stabilisator Toco: α-d,l-Tocopherol. Die Unbedenklichkeit des Stabilisators Tocopherol in bezug auf Toxizität geht aus der Publikation von Th. Bensin in « Biochemie der Vitamine », Akad. Verlags Ges. Frankfurt/Main, *1966,* Seiten 211-220, hervor.

Die in der Tabelle angegebenen Polyisobutylene wurden gemäß Beispiel der DE-AS 1 911 307 thermisch abgebaut. Probe A und B ergeben ein rußhaltiges Abbauprodukt mit einem Molekulargewicht $M_v$ (Viskositätsmittel) zwischen 30 000 und 40 000. Probe C ergibt nach ca. einstündigem Betrieb ein rußhaltiges Abbauprodukt mit einem Molekulargewicht $\overline{M}_v$ (Viskositätsmittel) zwischen 37 000 und 43 000. Probe D und E führen im Dauerbetrieb zu einem klaren, farblosen und toxisch einwandfreien Abbauprodukt mit einem Molekulargewicht $\overline{M}_v$ (Viskositätsmittel) zwischen 48 000 und 52 000.

## Ansprüche

1. Verfahren zum Abbau von hochmolekularen, Wärmestabilisator enthaltenden Polyisobutylenen mit durchschnittlichen Molekulargewichten aus dem Viskositätsmittel größer als 2 000 000 zu Polyisobutylenen mit durchschnittlichen Molekulargewichten aus dem Viskositätsmittel kleiner als 200 000 in Schneckenmaschinen bis zu drei Minuten lang bei Temperaturen zwischen 150 und 400 °C und Scherungen mit Geschwindigkeitsgradienten zwischen 100 und 700 sec$^{-1}$, dadurch gekennzeichnet, daß als Stabilisator ein α-, β-, γ- oder δ-Tocopherol oder Mischungen derselben untereinander in Mengen von 5 bis 500 Gew.-ppm, bezogen auf das Polyisobutylen, verwendet wird.

2. Verfahren nach Anspruch 1, dadurch gekennzeichnet, daß 10 bis 100 Gew.-ppm des Stabilisators verwendet werden.

## Claims

1. A process for the degradation of high molecular weight polyisobutylenes, containing a thermal stabilizer and having an average molecular weight (viscosity average) of more than 2,000,000, to polyisobutylenes having an average molecular weight (viscosity average) of less than 200,000 in screw extruders for up to 3 minutes at 150 to 400 °C under shear at a velocity gradient of from 100 to 700 sec$^{-1}$, wherein an α-, β-, γ- or δ-tocopherol or a mixture thereof is used as stabilizer in an amount of from 5 to 500 ppm, based on the weight of the polyisobutylene.

2. A process as claimed in claim 1, wherein the stabilizer is used in an amount of from 10 to 100 ppm, based on the weight of the polyisobutylene.

**Revendications**

1. Procédé pour la dégradation de polyisobutylènes à poids moléculaire élevé, renfermant des stabilisants à la chaleur, qui possèdent des poids moléculaires moyens, calculés à partir de la viscosité moyenne, supérieurs à 2 000 000, en des polyisobutylènes avec des poids moléculaires moyens, calculés à partir de la viscosité moyenne inférieurs à 200 000 par un traitement dans des machines à vis à des températures entre 150 et 400 °C et des cisaillements avec des gradients de vitesse compris entre 100 et 700 secondes$^{-1}$, d'une durée pouvant aller jusqu'à trois minutes, caractérisé en ce que l'on incorpore au polyisobutylène entre 5 et 500 ppm en poids d'un stabilisant choisi parmi le α-, le β-, le γ- et le δ-tocophérol et des mélanges de ceux-ci.

2. Procédé suivant la revendication 1, caractérisé en ce que le stabilisant est utilisé à raison de 10 à 100 ppm en poids.